# EUROPEAN PATENT APPLICATION

(11) **EP 2 211 264 A1**
(43) Date of publication of application: **28.07.2010**
(21) Application number: 09305059.9
(22) Date of filing: 22.01.2009
(51) Int. Cl.: G06F 3/06

(54) **Versatile electronic storage device**

(71) Applicant: Gemalto SA, 92190 Meudon (FR)
(72) Inventor: Ennesser, François, 75005 PARIS (FR)

(57) **Abstract**

The invention is an electronic storage device having a USB or IP communication interface and intended to be connected to a host machine. The storage device comprises a means able to exchange data with the host machine through the Media Transfer Protocol.

## Description

### (Field of the invention)

The present invention relates to versatile electronic storage devices. It relates particularly to portable data storage devices based on flash memory and intended to be accessed by a host machine.

### (Prior art)

A data storage device is a device whose primary purpose is storing information. A storage device has a non volatile memory where data may be recorded. Electronic data storage is storage which requires electrical power to store and retrieve the data. The electronic storage devices are portable devices with a contact connector and / or a wireless interface. In the present specification, the electronic storage devices are devices without direct human user interface. For example electronic storage devices may be a USB key or a memory card. A user must connect such electronic storage devices to a host machine in order to be able to read or write data from/into the device. In other words, such devices have no input or output peripheral like keypad and display. For example media players, mobile phones and Personal Digital Assistants are not considered as electronic storage devices within the meaning of this specification.

The Media Transfer Protocol (also called MTP) developed by Microsoft ® has been built upon a former Picture Transfer Protocol to provide the possibility to share information such as audio, video or text files between intelligent devices that do not support a compatible file system. This protocol assumes communication between a powerful computing device, typically a PC, acting as an Initiator, and a potentially less powerful one called the Responder. It is assumed that the responder is an intelligent device managing its own file system such as a Personal Digital Assistant, a mobile phone or a digital camera, which has the capability to play the audio or video files or otherwise make use of the text files. Thus the MTP mechanism is dedicated to advanced electronic devices that have their own Man Machine Interface.

The MTP protocol is supported in the USB domain by a dedicated Device Class specification, published in March 2008. It may however be implemented on other transport interfaces than USB. For example it may be implemented over TCP/IP.

Memory cards like USB tokens, Secure Digital ® cards or Multimedia ® (MMC) Cards comprise non-volatile memory with a size that may reach up to several hundred Megabytes. These memory cards may comprise a smart card controller able to provide additional secured computing services. These memory cards generally operate using a low level interface with the connected host machine. In particular, the management of information on the memory card is controlled by the hosting machine, which decides where and how the information will be stored in the card memory. In other words, the host machine is in charge of managing the file system stored in the memory card and of managing the security rights associated to stored data. This has a consequence that affects the security of data stored into such memory cards. To ensure the confidentiality of information that should not be disclosed unless a certain level of trust is established with a hosting device, trusted devices such as smart cards need to have control on the format under which they write the information (e.g. encrypting it) and the place where it will be located in the memory (e.g. spreading it across several places). This is not the case with low level mass storage protocols, where the storage device is not aware of the structure of what is being written on it. Thus there is a need for increasing the security of data stored in memory cards.

### (Summary of the Invention)

An object of the invention is to solve the above mentioned technical problems.

The object of the present invention is a portable electronic storage device which is intended to be connected to a host machine. The electronic storage device comprises a microcontroller, a USB communication interface, a non volatile memory, and a means capable of managing a protocol for exchanging data with the host machine, said protocol being of Media Transfer Protocol type.

Advantageously, the electronic storage device may comprise a second microcontroller of smart card type.

The non volatile memory may be a flash memory.

The microcontroller and the means may be merged in a unique microcontroller.

Another object of the present invention is a method of managing data in the portable electronic storage device as described above. The portable electronic storage device is connected to a host machine. The host machine is linked to a remote server via Internet. The method comprises the step of establishing a secure communication channel between the remote server acting as a Media Transfer Protocol initiator and the portable electronic storage device acting as a Media Transfer Protocol Responder.

### (Brief description of the drawings)

Other characteristics and advantages of the present invention will emerge more clearly from a reading of the following description of a number of preferred embodiments of the invention with reference to the corresponding accompanying drawing in which:

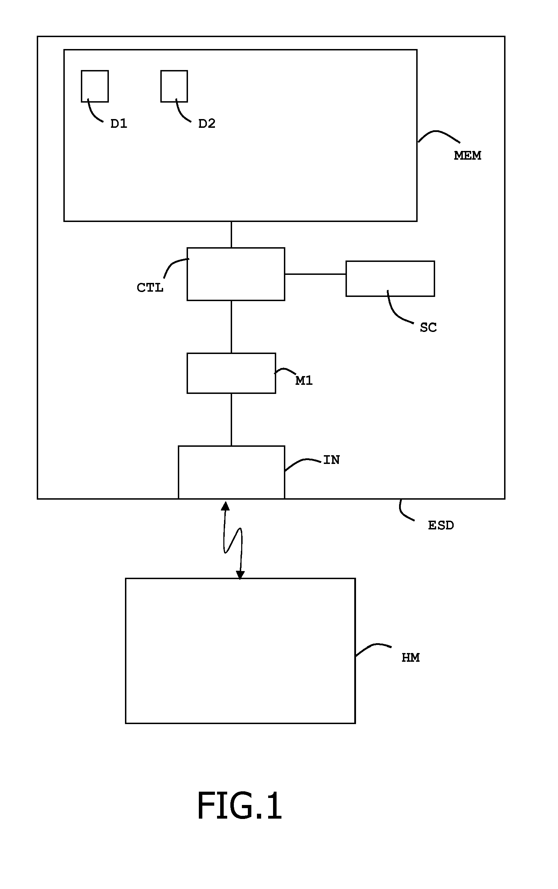

- Figure 1 depicts schematically an example of a first embodiment of an electronic storage device according to the invention.

### (Detailed description of the preferred embodiments)

The invention may apply to any types of electronic storage device intended to be connected to a host machine and to communicate through a block-oriented protocol able to support MTP. To demonstrate the invention, the embodiments described here after are related to a specific case where the electronic storage device is a memory device compliant with USB standard and comprising a smart card controller. In particular, the memory device may have the physical aspect of a USB dongle, or it may be embodied in the physical form factor of a smartcard according to ISO/IEC 7816-2.

An advantage of the invention is to provide electronic storage devices which may be used by a large number of host machines. According to the invention, the portability of the data stored in the electronic storage device is not limited to host machines supporting a common file system. Thus even if first and second host machines do not support the same file system format, a data written on the memory card by the first host machine may be retrieved by the second host machine. The invention allows using electronic storage devices which are independent of the file system type of the connected host machine.

Another advantage of the invention is to avoid an additional driver installation on the host machine intended to use the memory card according to the invention. Thanks to the Media Transfer Protocol (MTP) driver provided with Microsoft Windows ® operating systems, all MTP-compatible devices can be directly used on PC host machine.

An additional advantage of the invention is to profit from the Autosync feature defined by the MTP standard. The Autosync function allows an automatic synchronization of data between a host and the connected electronic storage device. For example, when the electronic storage device comprises SIM features, the phonebook content may be automatically updated according to phonebook data stored in mobile phone and phonebook data stored in the electronic storage device.

A further advantage of the invention is to allow the storage device to become visible and accessible from hosting devices to which it is not directly connected. The storage device according to the invention may be inserted in a mobile electronic device, e.g. a smart phone or a PDA, acting as an MTP initiator with regard to the storage device. This hosting electronic device may itself be connected to a Personal Computer, using the MTP Protocol to synchronize its content. In such situations, the Personal Computer typically takes the role of an initiator and the electronic device hosting the storage device acts as a responder. The MTP Protocol supports the capability for a device to act simultaneously as a responder with respect to a first device and as an initiator with respect to a second device. Thus, the MTP capabilities of a storage device according to the invention may be made transparently available to the Personal Computer acting as a remote host through the hosting electronic device, which would simply route relevant requests and responses between the MTP initiator (i.e. the Personal Computer) and the ultimate MTP responder (i.e. the storage device). This enables synchronization between a PC and a storage device according to the invention to take place without requesting the user to physically displace it from one device to another.

A further advantage of the invention is that support of MTP on a storage device may be exploited to securely manage the storage device content from a remote server. Amendment B to the Global Platform Card ® Specification 2.2 describes the establishment of a secure PSK/TLS connection between a managed device, inserted in a terminal providing IP connectivity such as a mobile phone, and a remote administration server to securely manage the content of storage devices such as a smartcards. This PSK/TLS connection constitutes a secure transport layer to exchange MTP traffic between the remote server acting as an initiator and a storage device according to the invention acting as an MTP Responder. Thus, the MTP Protocol can be used as a scheme to administrate the content of a storage device from a remote server on an IP network.

According to the MTP standard, the host may get information related to limitations of the available features provided by the connected electronic storage device. Such a sharing of information allows distributing electronic storage devices having limited features compared with the MTP standard. Furthermore, MTP provides great flexibility to support field-specific protocol extensions (i.e. additional command/response sets and events) to meet specific purposes. In particular, storage devices according to the invention may support a secure content management extension where their MTP Functional Mode would change according to the security level of the MTP connection established with the initiator. With this extension, some MTP objects on the storage device may only become visible once mutual authentication has been ensured with the initiator, or objects that appear by default as Read-only may become modifiable only after a specific identification credential (e.g. Password or PIN code) has been verified.

The transport independent MTP protocol is defined in the Media Transfer Protocol Enhanced specification version 2.0 standard available at http://www.microsoft.com/downloads/details.aspx?familyi d=FED98CA6-CA7F-4E60-B88C-C5FCE88F3EEA&displaylang=en.

The Media Transfer Protocol is based on three layers: physical, transport and command layers. The kind of physical layer is not defined by the MTP specifications. In the below-described embodiment, the physical layer relies on Universal Serial Bus (USB). The transport layer corresponds to the USB Still Image Class of the Picture Transfer Protocol. It defines how commands are sent, how responses to command, and how commands are formatted. The command layer defines a list of available commands.

**Figure 1** shows an example of architecture of an electronic storage device according to a first embodiment of the invention.

The portable electronic device ESD comprises a communication interface IN corresponding to a USB port. The USB port IN is intended to communicate with a host machine HM which may be a Personal Computer, a mobile phone, a Personal Digital Assistant or any machine able to behave like a USB host and like an MTP Initiator. The portable electronic device ESD comprises a controller M1 linked to the port IN. The controller M1 is able to treat data coming from and going to the port IN through the Media Transfer Protocol (MTP). The portable electronic device ESD comprises a memory controller CTL linked to the controller M1. The portable electronic device ESD comprises a non volatile memory MEM of flash type. The memory MEM is linked to the memory controller CTL. The memory MEM is managed by the memory controller CTL.

The portable electronic device ESD comprises a smart card component SC which may provide secured computing and secured storing services. A smart card component generally comprises a microprocessor, a working memory, a non volatile memory, a communication interface and an operating system. Details of the smart card component SC do not appear on Figure 1.

When the portable electronic device ESD is plugged to a host machine HM, the USB enumeration process is started. Then the controller M1 exposes the USB device class "Media Transfer Protocol" as defined in the Revision 1.0 specification dated December 5^{th}, 2007 published by the USB Implementers Forum and available at http://www.usb.org/developers/devclass_docs/MTP_1.0.zip.

The portable electronic device ESD is then detected as a MTP device reachable through USB protocol. Note that the MTP device class may be only one of several USB device classes supported by the Electronic Storage device, which may present itself as a Composite USB device as defined in the USB 2.0 specification published by the USB IF.

The host machine HM acts as an Initiator as defined by the MTP and the portable electronic device ESD acts as a Responder as defined by the MTP. It is important to note that according to MTP standard the Responder is assumed to be an intelligent device managing its own file system, making use of digital media files and having the capability to provide direct, dynamic and autonomous services to the user.

According to the invention, the role of responder is taken by a storage device which has no capacity to provide direct, dynamic and autonomous services to the user. A user can access to services of an electronic storage device only through a connected host machine.

In a preferred embodiment the controller M1 is in charge of checking if relevant access rights have been granted for accessing a data stored in the memory MEM.

Advantageously, access conditions may restrict the access to data stored in the memory MEM. For example when data D1 and D2 are assumed to be stored in the memory MEM, access conditions may authorize only reading of data D1 and authorize both reading and writing of data D2.

Advantageously, access rights are checked only when accessing a data stored in a private area of the memory MEM.

Alternatively, the memory controller CTL and the controller M1 may be merged in a single circuit.

Alternatively, the memory controller CTL, the controller M1 and the smart card component SC may be merged in a single circuit. In this case the portable electronic device ESD behaves like a smart card having a large non volatile memory and implementing a MTP responder USB peripheral. When a host machine tries to access data stored in the memory MEM, the smart card component SC checks if the relevant access rights are granted.

Moreover, thanks to invention the technical problem is solved without having a file server embedded in the electronic storage devices. The electronic storage device is responsible for the selection of the data storage location and for the check of the data access.

According to the invention, a remote server may securely access the portable electronic storage device ESD content through a secure channel. In particular, the remote server may be reached thanks to an Internet link established via a host machine HM where the portable electronic storage device ESD is connected. A secure Internet Protocol (IP) connection may be set via the host machine by using the PSK/TLS mechanism as defined in Global Platform Card ® 2.2 Specifications. Assuming that the portable electronic storage device ESD comprises a SIM microcontroller and that the host machine is a 3G telecom terminal, the secure Internet Protocol (IP) connection may be provided by BIP or IP card model. The BIP model corresponds to the Bearer Independent Protocol defined by the ETSI TS 102 223 standard associated to the ISO interface as defined by ETSI TS 102 221 standard. The IP card model is defined by the ETSI TS 102 483 standard associated to the USB as defined by ETSI TS 102 600 standard.

Such a secure remote access allows a distant server to administrate and manage the content of the portable electronic storage device according to the invention.

## Claims

1. A **portable electronic storage device (ESD)** intended to be connected to a host machine (HM), said electronic storage device (ESD) comprising:
- a microcontroller (CTL),
- a USB communication interface (IN),
- a non volatile memory (MEM),
**characterized in that** said portable electronic storage device (ESD) comprises a means (M1) able to manage a protocol for exchanging data with said host machine (HM), said protocol being of Media Transfer Protocol type.

2. A portable electronic storage device (ESD) according to claim 1, wherein said electronic storage device (ESD) comprises a second microcontroller (SC) of smart card type.

3. A portable electronic storage device (ESD) according to one of claims 1 or 2, wherein said non volatile memory (MEM) is a flash memory.

4. A portable electronic storage device (ESD) according to one of claims 1 to 3, wherein said microcontroller (CTL) and means (M1) are merged in a unique microcontroller.

5. A **method** of managing data in the portable electronic storage device (ESD) of Claim 2, said portable electronic storage device (SC) being connected to a host machine (HM) which is linked to a remote server via Internet,
**characterized in that** said method comprises the step of establishing a secure communication channel between the remote server acting as a Media Transfer Protocol initiator and the portable electronic storage device (SC) acting as a Media Transfer Protocol Responder.
